# EUROPEAN PATENT SPECIFICATION

(11) **EP 3 028 114 B1**
(45) Date of publication and mention of the grant of the patent: **26.12.2018**
(21) Application number: 13890682.1
(22) Date of filing: 30.07.2013
(51) Int. Cl.: G06F 1/16

(54) **SUPPORT ASSEMBLY FOR A DEVICE**
HALTEANORDNUNG FÜR EINE VORRICHTUNG
ENSEMBLE FORMANT SUPPORT POUR UN DISPOSITIF

(43) Date of publication of application: 08.06.2016
(73) Proprietor: Hewlett-Packard Development Company, L.P., Houston, Texas 77070 (US)
(72) Inventor: LEE, Peter, K., Sunnyvale, California 94085 (US); GAGNE, Jacques, Sunnyvale, California 94085 (US); GRADWOHL, Raymond, L., Sunnyvale, California 94085 (US); ATALLAH, Jean, John, Sunnyvale, California 94085 (US)
(74) Representative: HGF Limited
(86) International application number: PCT/US2013/052749
(87) International publication number: WO 2015/016837

(56) References cited:
- WO-A1-2014/070141
- KR-A- 20090 043 079
- KR-A- 20110 007 291
- KR-B1- 101 237 560
- US-A1- 2003 223 188
- US-A1- 2006 238 966
- US-A1- 2009 134 286
- US-A1- 2009 206 212
- US-A1- 2012 090 212

## Description

### BACKGROUND

For user convenience, a display device can be mounted on a support assembly that allows for adjustment of a position of the display device. The support assembly can include multiple members that are pivotably arranged with respect to each other, such that a user can move the display device to a target position. For display devices that incorporate touch sensitive technology, maneuvering the display into a particular target area for optimum comfort for direct interaction (e.g., direct touch) with the display can be difficult for the user.

PCT patent application WO 2014/070141 A1 forms part of the state of the art under Article 54(3) EPC and relates to a support assembly for a device and a method of forming the support assembly.

### BRIEF DESCRIPTION OF THE DRAWINGS

For a detailed description of exemplary embodiments of the invention, reference will now be made to the accompanying drawings in which:
Fig. 1 is a rear perspective view of an arrangement that includes a display device and a support assembly according to some implementations;
Fig. 2 is a side, exploded perspective view of a support assembly according to some implementations;
Fig. 3 is a top perspective view of a hinge assembly that is part of the support assembly according to some implementations;
Fig. 4 is another top perspective view of the hinge assembly with a hinge cover removed, in accordance with some implementations;
Fig. 5 is a cross-sectional view of a rotatable cam according to some implementations;
Fig. 6 is an exploded view of some components of the support assembly, in accordance with some implementations;
Fig. 7 is a rear view of a cam according to some implementations;
Fig. 8 is a rear perspective view of a display device and a support assembly according to alternative implementations;
Fig. 9 is a rear perspective view of a portion of the support assembly of Fig. 8 according to alternative implementations;
Fig. 10 is a flow diagram of a process of forming a support assembly according to some implementations;
Fig. 11 is a side view showing the display device of Fig 1 in a first position;
Fig. 12 is a side view showing the display device of Fig. 1 in a second position;
Fig. 13 is a perspective view of the base of the support assembly of Fig. 1;
Fig. 14 is a side view of the base of the support assembly of Fig. 1;
Fig. 15 is a perspective view of the base of the support assembly of Fig. 1 with some of the outer covers removed;
Fig. 16 is a perspective view of the arm of the support assembly of Fig. 1 with the outer covers removed;
Fig. 17 is a rear view of the upper hinge mechanism of the support assembly of Fig. 1;
Fig. 18 is a perspective view of a portion of the upper hinge mechanism of the support assembly of Fig. 1;
Fig. 19 is another perspective view of a portion of the upper hinge mechanism of the support assembly of Fig. 1;
Fig. 20 is a side view of the support assembly of Fig. 1 with the coverings removed; and
Fig. 21 is another side view of the support assembly of Fig. 1 with the coverings removed.

### NOTATION AND NOMENCLATURE

Certain terms are used throughout the following description and claims to refer to particular system components. As one skilled in the art will appreciate, computer companies may refer to a component by different names. This document does not intend to distinguish between components that differ in name but not function. In the following discussion and in the claims, the terms "including" and "comprising" are used in an open-ended fashion, and thus should be interpreted to mean "including, but not limited to...." Also, the term "couple" or "couples" is intended to mean either an indirect or direct connection. Thus, if a first device couples to a second device, that connection may be through a direct electrical or mechanical connection, through an indirect electrical or mechanical connection via other devices and connections, through an optical electrical connection, or through a wireless electrical connection. In addition, as used herein, the terms "about," "substantially," and "approximately" mean plus or minus 10%. Further, as used herein, the word "tilt" refers the position of a display with respect to the vertical axis. Thus, the phrase "maximum forward tilt" refers to the maximum forward position of an upper edge of the display relative to the lower edge, and the phrase "maximum forward tilt angle" refers to the angle between the display and the vertical axis when the display is disposed at its maximum forward tilt. Similarly, as used herein, the phrase "maximum rearward tilt refers to the maximum rearward position of an upper edge of the display relative to the lower edge, and the phrase "maximum rearward tilt angle" refers to the angle between the display and the vertical axis when the display is disposed at its maximum rearward tilt.

### DETAILED DESCRIPTION

The following discussion is directed to various examples of the disclosure. Although one or more of these examples may be preferred, the examples disclosed should not be interpreted, or otherwise used, as limiting the scope of the disclosure, including the claims. In addition, one skilled in the art will understand that the following description has broad application, and the discussion of any example is meant only to be descriptive of that example, and not intended to intimate that the scope of the disclosure, including the claims, is limited to that example.

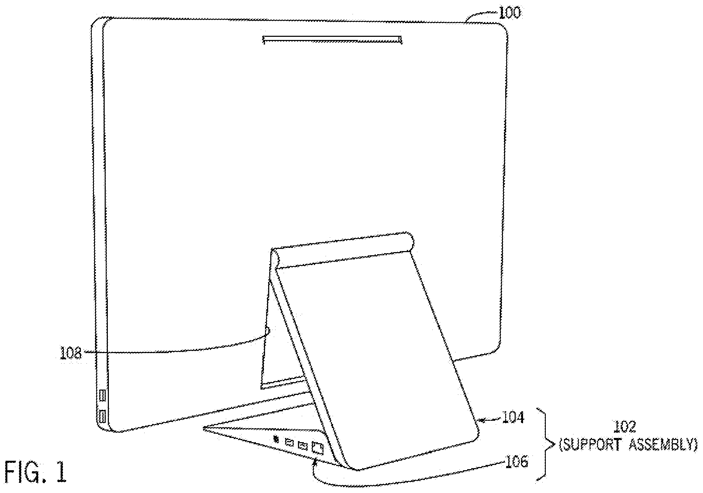

Fig. 1 illustrates an example arrangement that includes a display device 100 that is supported by a support assembly 102 according to some implementations. In Fig. 1, the rear of the display device 100 is shown. The support assembly 102 has an arm 104 pivotably connected to the rear of the display device 100. The support assembly 102 further includes a base 106, which can sit on a support surface (e.g., surface of a table or other furniture or other structure). The arm 104 is pivotably mounted with respect to the base 106, such that the arm 104 can rotatably pivot with respect to the base 106. As further depicted in Fig. 1, a recess 108 is formed in the rear of the display device 100 to receive a part of the arm 104 when the display device 100 is pivoted such that the display device 100 collapses towards the arm 104. A user can adjust the position of the display 100 by gripping the display device 100 and moving the display device 100 to a target position. The movement of the display device 100 can cause relative pivoting between the display device 100 and the arm 104, and between the arm 104 and the base 106.

Although reference is made to a display device in some examples, it is noted that a support assembly according to some implementations can also be used for supporting other types of devices, such as computers, tablets, appliances, furniture, industrial equipment, all-in-one computers, and so forth. Note that various electronic components of any of the foregoing devices can be included in any one or some combination of the following: display device 100, arm 104, and base 106.

As display devices have increased in size, their weight has increased correspondingly. As a result, with traditional support assemblies, a user may find it difficult to move the display device 100. In some cases, traditional support assemblies may rely upon relatively large frictional forces between moveable members in the support assembly to support the weight of a display device. In such support assemblies, a user may have to expend a relatively large force when attempting to adjust a position of the display device. Moreover, the articulation of the pivotable members of a traditional support assembly may not be smooth, which can lead to abrupt movement of the display device during position adjustment.

In accordance with some implementations, the support assembly 102 according to some implementations provides for smooth articulation through a relatively wide range of rotating angles between the arm 104 and base 106 of the support assembly 102. The adjustment of the support assembly 102 can be accomplished by application of relatively small, even force by a user. As discussed further below, the provision of one or multiple biasing elements in the support assembly 102, in combination with use of a rotatable cam mechanism, allows for the smooth articulation of the arm 104 relative to the base 106.

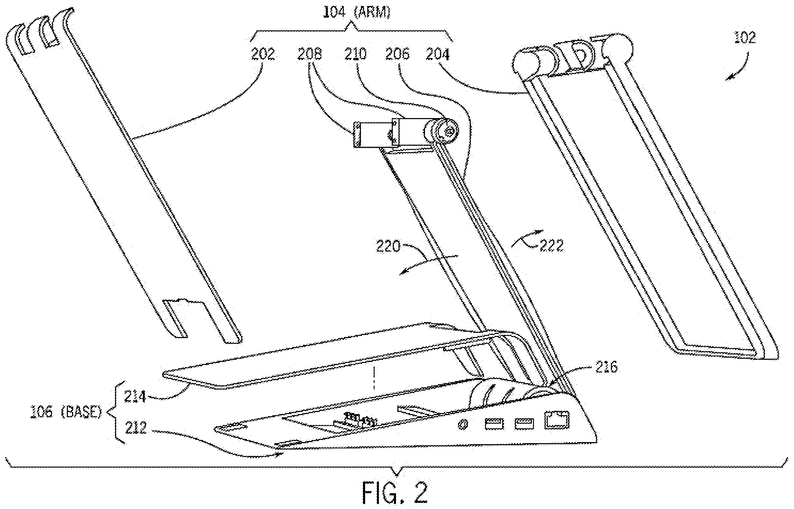

Fig. 2 is an exploded side view of the support assembly 102, where a front arm cover 202 and a rear arm cover 204 are depicted as being disengaged from an arm support member 206. The arm support member 206 is pivotably attached to display support members 208 on a hinge mechanism 210. Collectively, items 202, 204, 206, 208, and 210 are part of the arm 104.

The display support members 208 are attached to the rear of the display device 100 depicted in Fig. 1, such as by use of screws or other attachment mechanisms. The hinge mechanism 210 allows the display support members 208 to pivot with respect to the arm support member 206. In this manner, a user can pivotably adjust the position of the display device 100 relative to the arm 104.

The arm 104 is further pivotably attached to the base 106 through a hinge assembly 216, which has a base support structure 212 and an upper base cover 214. In Fig. 2, the upper base cover 214 is detached from the base support structure 212 to illustrate a portion of components inside the base support structure 212. A portion of the hinge assembly 216 is depicted as being part of the base support structure 212. The hinge assembly 216 pivotably couples the arm 104 to the base 106, as discussed in further detail below.

As further shown in Fig. 2, an arrow 220 depicts a direction of rotation of the arm support member 206 towards the base 106. Movement of the arm support member 206 along direction 220 refers to collapsing the arm support member 206 towards the base 106. Another arrow 222 depicts rotation of the arm support member 206 away from the base 106.

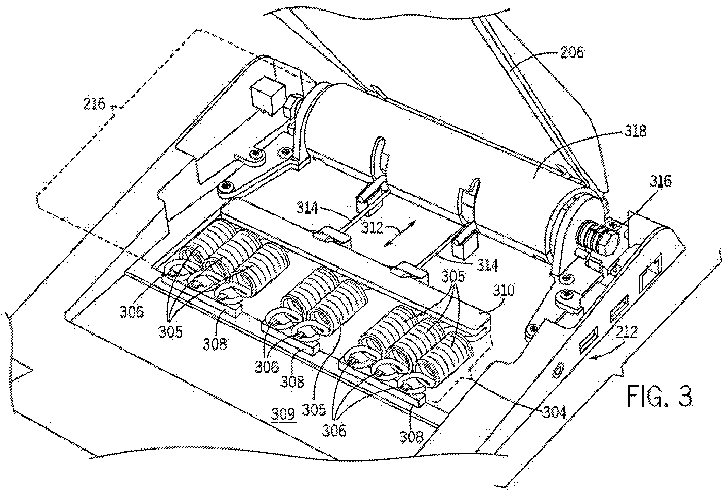

Fig. 3 is a top perspective view of the hinge assembly 216 that is provided in an inner chamber defined inside the base support structure 212. Note that the upper base cover 214 (Fig. 2) has been removed in the view of Fig. 3.

The hinge assembly 216 includes a biasing assembly 304, which can include a number of linear tension springs 305 in some implementations. Although an example number of springs 305 are depicted as being part of the biasing assembly 304, it is noted that in other implementations, a different number of springs 305 can be employed, where the different number can be one or greater. Also, even though the biasing assembly 304 is depicted as being part of the base support structure 212 in Fig. 3, the biasing assembly 304 can alternatively be provided as part of the arm 104 in other implementations.

Moreover, in other implementations, the biasing assembly 304 can be of a different type, such as a piston assembly where unequal pressure provided on different sides of a piston provides for a biasing force to be applied.

First ends of the springs 305 are attached to hooks 306 connected to support features 308 formed on a surface 309 provided by the base support structure 212. Second ends of the springs 305 are connected to a moveable longitudinal bar 310, which is linearly movable back and forth along direction 312.

As further depicted in Fig. 3, the bar 310 is connected to links 314. In some implementations, the links 314 are cables. The cables 314 interconnect the bar 310 to a rotatable cam inside a hinge 316. A portion of the hinge 316 is partially covered by a hinge cover 318.

The linear springs 305 are configured to apply a biasing force that tends to bias the arm support member 206 away from the base support structure 212. Collapsing the arm support member 206 towards the base support structure 212 opposes the biasing force applied by the linear springs 305, as applied through the cables 314 to the hinge 316.

Movement of the bar 310 away from the hinge 316 (along direction 312) causes the arm support member 206 to rotate away from the base support structure 212. On the other hand, movement of the bar 310 towards the hinge 316 occurs when the arm support member 206 collapses towards the base support structure 212.

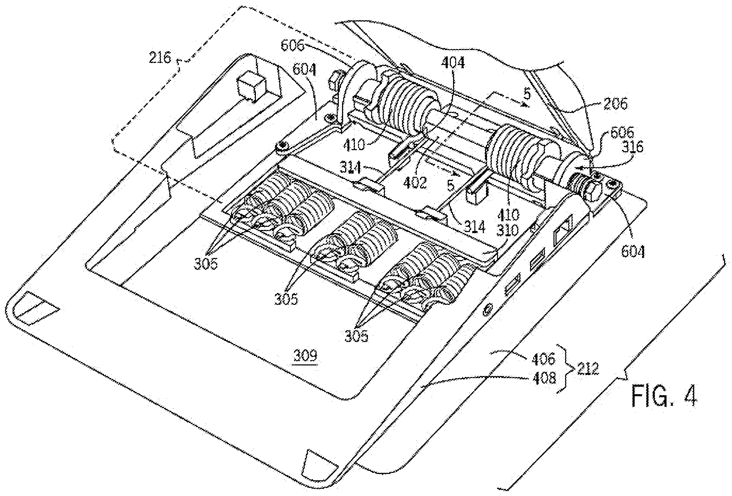

The hinge cover 318 of Fig. 3 is removed in the view of Fig. 4, which shows a rotatable cam 402 that is part of the hinge 316. In the view of Fig. 4, a bottom base cover 408 is detached from a base plate 406. The base plate 406 and the bottom base cover 408 form the base support structure 212.

The rotatable cam 402 has grooves 404 to receive the corresponding cables 314. As the cam 402 is rotated due to relative pivoting motion of the arm support member 206 and the base plate 406, the cables 314 are received into the respective grooves 404 of the cam 402. As a result, at least a portion of each cable 314 is wound onto the cam 402 as the cam 402 rotates.

As further depicted in Fig. 4, in accordance with some implementations, torsional springs 410 are provided in the hinge 316 to apply a biasing force. One end of each of the torsional springs 410 is supported by a corresponding torsional spring support structure 412 provided on the surface 309. In other examples, other types of torsional biasing elements can be provided. The torsional springs 410 work in conjunction with the linear springs 305 to bias the arm support member 206 away from the base plate 406. The collective biasing force of the linear springs 305 and torsional springs 410 help support the weight of the display device 100 of Fig. 1. To collapse the display device 100 downwardly, a user can simply apply a downward force on the display device 100 to collapse the arm 104 of Fig. 1 towards the base 106, which opposes the biasing force applied by the springs 305 and 410.

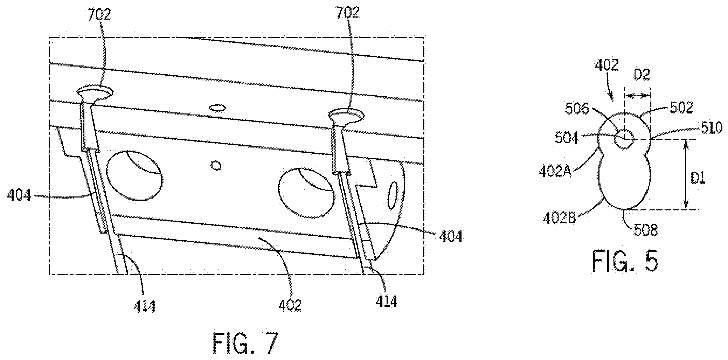

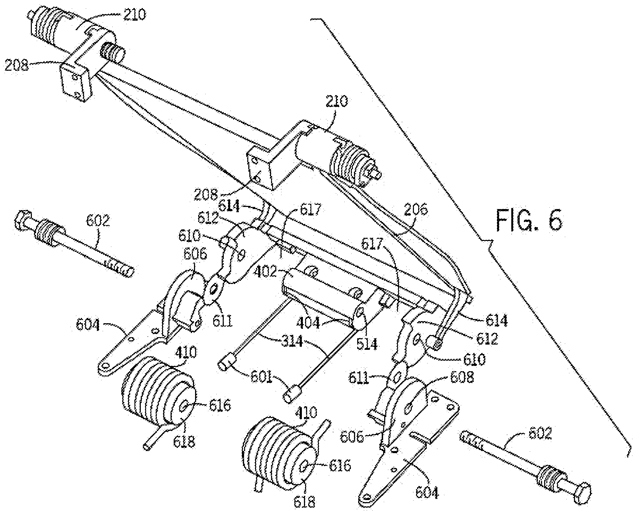

Fig. 5 shows a cross-sectional profile 502 of the cam 402, taken along section 5-5 in Fig. 4. As depicted in Fig. 5, the cross-sectional profile 502 of the cam 402 is non-circular. The cam 402 is rotatable about an axis represented by 504, which is at the center of a through-hole 506 of the cam 402. A mounting pin (shown in Fig. 6) is passed through the through-hole 506, and the cam 402 can rotate with respect to the mounting pin.

The cam 402 has a first portion 402A and a second portion 402B that is integrally formed with the first portion 402A. The first portion 402A has a semicircular profile. The second portion 402B also has an arc-shaped profile. Collectively, the cam portions 402A and 402B form a general figure-8 shape, which provides the non-circular cross-sectional profile 502. In other examples, the cam 402 can have other non-circular cross-sectional profiles, such as an oval profile, a polygonal profile, and so forth.
Due to the non-circular cross-sectional profile 502 of the cam 402, a distance D1 between the axis 504 and a first outer edge 508 of the cam 402 is different from a second distance D2 between the axis 504 and a second outer edge 510 of the cam 402. The distance D1 extends along a first direction of the cam 402, while the distance D2 extends along a second direction of the cam 402, where the second direction is generally perpendicular to the first direction.

The non-circular cross-sectional profile of the cam 402 causes the cam 402 to provide a non-linear response to a linear force applied by the linear springs 305, as the cam 402 is rotated and as portions of the cable 314 are wound onto the cam 402. Consequently, the amount of elongation of the springs 305 caused by a rotation of the cam 502 varies as a function of angle of the cam rotation. Thus, the torque applied on the cam 402 by the linear springs 305 (and the torsional spring 410) varies non-linearly as a result of cam rotation angle.

Fig. 6 is an exploded view of portions of the support assembly 102. Base hinge mount structures 604 (also shown in Fig. 4) are attached to the base plate 406 depicted in Fig. 4. The base hinge mount structures 604 have flange members 606 with openings 608 that are to be aligned with respective openings 610 of a hinge connector structure 612. A washer 611 is provided between each pair of the base hinge mount structure 604 and hinge connector structure 612. The hinge connector structures 612 are attached by respective connector members 614 to the arm support member 206.

Mounting pins 602 are arranged to extend through the aligned openings 608 and 610 of the respective base hinge mount structures 604 and hinge connector structures 612. The mounting pins 602 also pass through respective openings 616 of torsional ring support members 618 to engage with the through-hole 504 of the cam 402. The torsional ring support members 618 are generally cylindrical in shape, and are designed to hold the respective torsional springs 410, as depicted. The torsional ring support members 618 are arranged to be provided in respective regions 617 inside the hinge connector structures 612. In this way, the openings 616 of the torsional ring support members 618 can align with respective openings 610 of the hinge connector structures 612.

The cam 602 is pivotable or rotatable about the mounting pins 602. Pivoting of the cam 402 results in corresponding pivoting of the hinge connector structures 612, which are connected to the arm support member 206. As a result, pivoting of the cam 402 results in corresponding pivoting of the arm support member 206.

As further shown in Fig. 6, the cables 314 have respective first connection ends 601 which are configured for connection to the moveable bar 310 of Fig. 3.

A rear view of a backside of the cam 402 is depicted in Fig. 7. Fig. 7 shows the grooves 404 of the cam 402 extending to the rear side of the cam 404, with the cables 314 extending along the grooves 404. Second connection ends (similar to first connection ends 601 in Fig. 6) of the cables 314 are engaged in respective connection slots 702 of the cam 402.

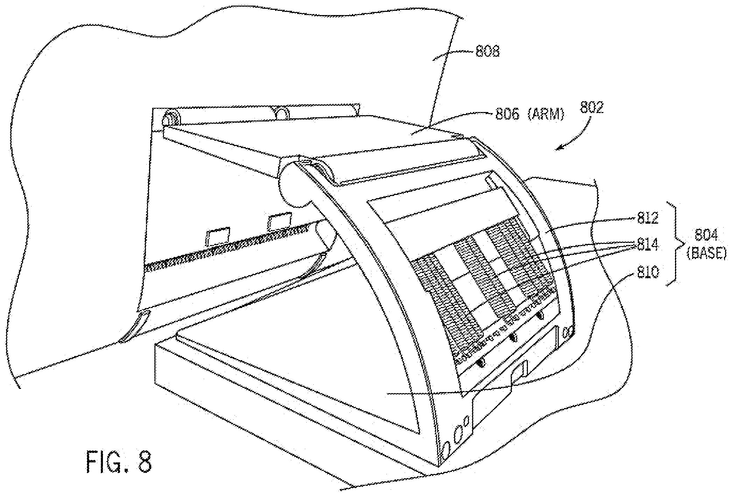

Fig. 8 illustrates a support assembly 802 according to alternative implementations. The support assembly 802 includes a base 804 that is pivotably attached to an arm 806. The arm 806 in turn is pivotably attached to a display device 808. The base 804 has a stand 810 and a generally arc-shaped base extension 812 that is pivotably attached to the arm 806. A rear cover (not shown) of the base extension 812 has been removed to show linear tension springs 814 provided in the base extension 812. The linear springs 814 are provided to apply a biasing force, similar to that provided by the linear springs 305 of Fig. 4. In other implementations, the linear springs 814 can be provided in the arm 806 instead of the base 804.

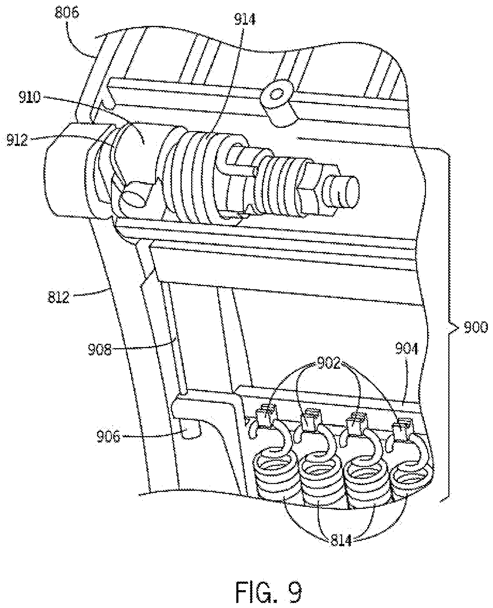

A hinge assembly 900 for pivoting attachment of the base extension 812 and the arm 806 is illustrated in Fig. 9. The linear springs 814 are attached to hooks 902 of a movable member 904. Additionally, a first connection end 906 of a cable 908 is connected to the movable member 904. Although not shown, a similar cable is provided on the other side to connect to another side of the movable member 904.

The cable 908 extends upwardly to a rotatable cam 910, which has a non-circular cross-sectional profile. The cable 908 extends in a groove 912 provided in the cam 910. A second connection end 912 of the cable 908 is engaged with the cam 910. As further depicted in Fig. 9, a torsional spring 914 is provided at the hinge, where the torsional spring 914 provides functionality similar to that of a torsional spring 410 shown in Fig. 4. Although just one torsional spring and one cam 910 is depicted in Fig. 9, it is noted that another torsional spring 914 and another cam 910 are provided on the other side of the hinge assembly 900.

Similar to the operation of the support assembly 102 discussed in connection with Figs. 1-7, the linear springs 814 and torsional springs 914 of the support assembly 802 apply a biasing force to support the weight of the display device 808. Adjustment of the position of the display device 808 causes rotation of the cams 910 and corresponding movement of the moveable member 904. Due to the non-circular cross-sectional profile of the cams 910, a non-linear response is provided by rotation of the cam 910 to the linear force applied by the linear springs 814. In this way, smooth articulation of the display device 808 can be accomplished across a relatively wide range of rotation angles, similar to that provided by the support assembly 102 discussed above.

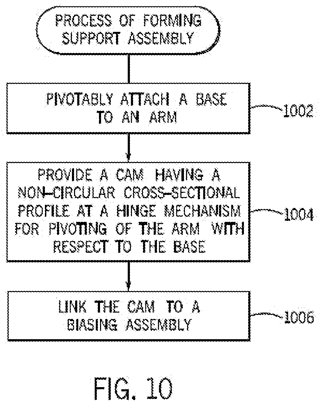

Fig. 10 is a flow diagram of a process of forming a support assembly according to some implementations, such as the support assembly 102 or 802 discussed above. The process includes pivotably attaching (at 1002) a base to an arm that is for attachment to a device, such as a display device. The process further includes providing (at 1004) a cam with a non-circular cross-sectional profile at a hinge that allows for pivoting of the arm with respect to the base. Additionally, the process links (at 1006) the cam to a biasing assembly using a link having a portion that is windable on the non-circular cross-sectional profile of the cam.

The following describes example operation of an arrangement as depicted in Figs. 1-4. A user can grip the display device 100 (Fig. 1) to move the display device 100. If the user applies a force to cause the arm 104 to collapse towards the base 106 (such as to move the display device 100 downwardly), then that applied force opposes the collective biasing force of the linear springs 305 and torsional springs 410 (Fig. 4) that help support the weight of the display device 100. Collapsing the arm 104 towards the base 106 causes counterclockwise rotation of the rotatable cam 402 (Fig. 4), which winds the cables 314 (Fig. 4) onto the cam 402 to pull the bar 310 towards the hinge 316, which extends the linear springs 305.

In contrast, if the user applies a force to cause the arm 104 to be moved away from the base 106 (such as to lift the display device 100), then this lifting force is aided by the collective biasing force of the linear springs 305 and torsional springs 410. Moving the arm 104 away from the base 106 causes clockwise rotation of the cam 402, which allows the bar 310 to move away from the hinge 316 and allows contraction of the linear springs 305.

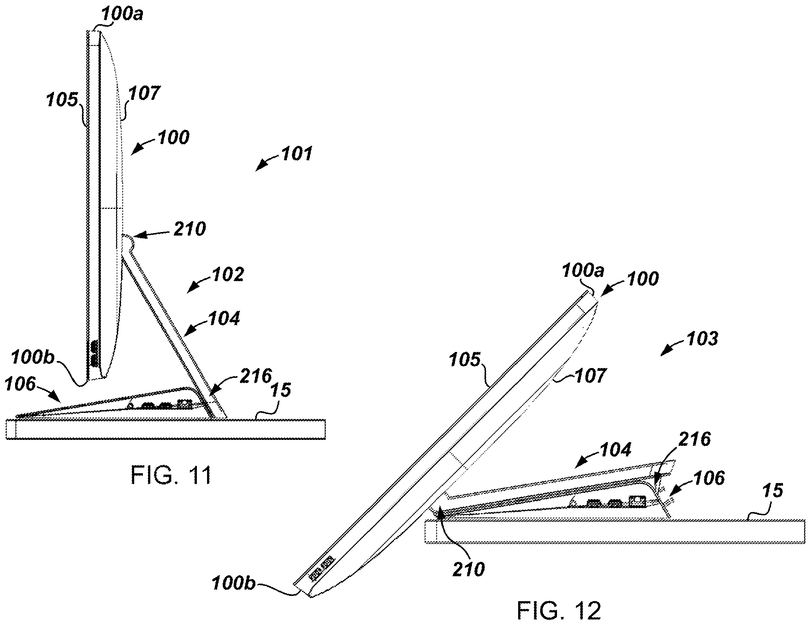

In addition to the features described above, support assembly 102 may also include additional components and features which allow for additional performance in the operation thereof. Typically, the optimum ergonomic placement of a display for simply viewing an image is often at odds with such placement or engaging in direct interaction therewith. Thus, users desiring to use a single computer system for both traditional viewing applications as well as touch interactive applications often encounter difficulties in positioning and/or utilizing such systems. As a result, referring briefly to Figs 11 and 12, in some examples, support assembly 102 includes features which allow the display 100 to be placed in a wide variety of positions. For example, in Fig. 11, display 100 is shown occupying a first position 101 wherein a bottom edge 100b of display 100 is positioned at or above a support surface 15. In some examples, the first position 101 is most advantageous and desirable when a user is simply viewing images on display 100. Thus, the first position 101 may be referred to herein as a "viewing position." As another example, Fig. 12 shows display 100 occupying a second position 103 wherein the arm 104 is collapsed toward the base 106 along the direction 220 (see Fig. 2) and the bottom edge 100b of display 100 is positioned below the support surface 15. The second position 103, shown in Fig. 12, is particularly desirable when display 100 incorporates touch sensitive technology since such a position allows a user to more comfortably reach the entirety of display 100 for touch sensitive operations. Thus, the second position 103 may be referred to herein as a "touch screen position." It should be appreciated that the term "support surface" is used herein to merely refer to the surface that the assembly 102 may be resting on at a particular point in time and may include, in some examples, a desk, a table, a shelf, a floor, a counter-top, etc. As a result, the support surface 15 should not be interpreted, under any circumstances, as being a part of either assembly 102 or display 100. In the description that follows, examples of specific features and components of assembly 102 that contribute to the operational performance noted above will be discussed in more detail.

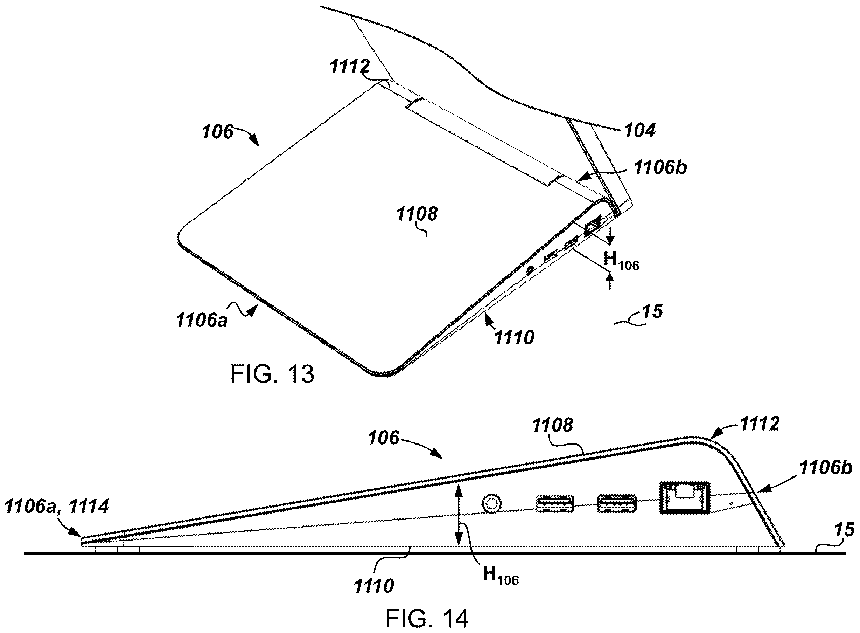

Referring now to Figs. 13 and 14, in some examples base 106 includes a first or front end 1106a, a second or rear end 1106b opposite the front end 1106a, a top surface 1108 extending generally between the ends 1106a, 1106b, and a bottom surface 1110 also extending generally between the ends 1106a, 1106b. During operation, bottom surface 1110 of base 106 engages with support surface 15 such that top surface 1108 is generally disposed above bottom surface 1110. Base 106 further includes a height H₁₀₆ that is measured between the bottom surface 1110 and the top surface 1108 along a line that is substantially normal or perpendicular to the support surface 15. Height H₁₀₆ generally continuously increases moving from a relative minimum at front end 1106a to a relative maximum at a point 1112 that is substantially aligned with hinge assembly 216 and proximate rear end 1106b. In this example, the height H₁₀₆ of base 106 increases substantially linearly moving from the relative minimum to the relative maximum. Thus, in the example shown, base 106 is substantially wedge shaped having the bulk of its mass distributed toward the rear end 1106b.

Referring now to Figs. 11-14, during operation, as display 100 is moved to the second position 103, the wedge shape of base 106 provides a greater amount of clearance for arm 104 as it rotates about hinge 316 of assembly 216. As a result, hinge mechanism 210 may be placed closer to surface 15, thereby at least partly allowing bottom edge 100a of display 100 to be placed below the support surface 15.

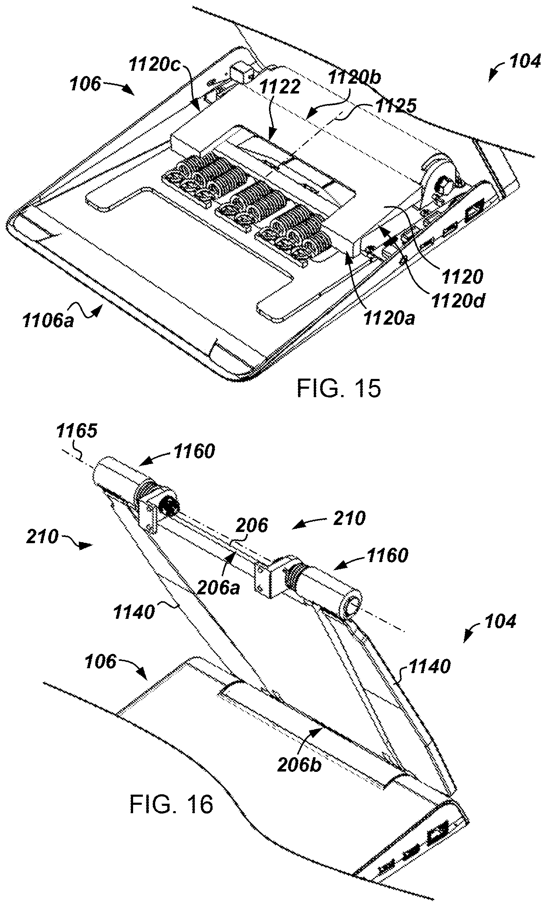

Referring now to Fig. 15, in some examples, base 106 also includes an additional weight 1120 disposed within base 106, between the surfaces 1108, 1110 (see Figs. 13 and 14), to provide additional weight or mass toward the rear end 1106b of base 106 during operation. In this example, weight 1120 is formed so as to correspond with the features of hinge assembly 216, previously described. In particular, in this example, weight 1120 comprises a central axis 1125, a first or front end 1120a, a second or rear end 1120b axially opposite the front end 1120a, a first lateral side 1120c, and a second lateral side 1120d radially opposite the first lateral side 1120c. A bay or receptacle 1122 extends axially from the front end 1120a and is radially disposed between the sides 1120c, 1120d, to accommodate the specific features of assembly 216 (e.g., springs 305, bar 310, etc.). In some examples weight 1120 comprises zinc; however, any suitable material to affect the weight and mass distribution within assembly 102 may be used while still complying with the principles disclosed herein. For example, in some implementations, weight may comprise iron, lead, steel, plastic, a ceramic, or some combination thereof.

Referring to Figs. 11, 12, and 15, during operation, weight 1120 helps to ensure that the center of gravity of assembly 102 is maintained substantially between display 100 and rear end 1106b of base 106 when display 100 is the first position 101, the second position 103, or is being transitioned between the positions 101, 103. In some examples, the center of gravity is maintained between a rear surface 107 of display 100 and the rear end 1106b of base 106. In addition, in some examples, maintaining the center of gravity substantially between display 100 and rear end 1106b of base 106, as previously described, helps to ensure that the display 100 and assembly 102 do not tip off of surface 15 when display 100 is placed in the second position 103 as shown in Fig. 12.

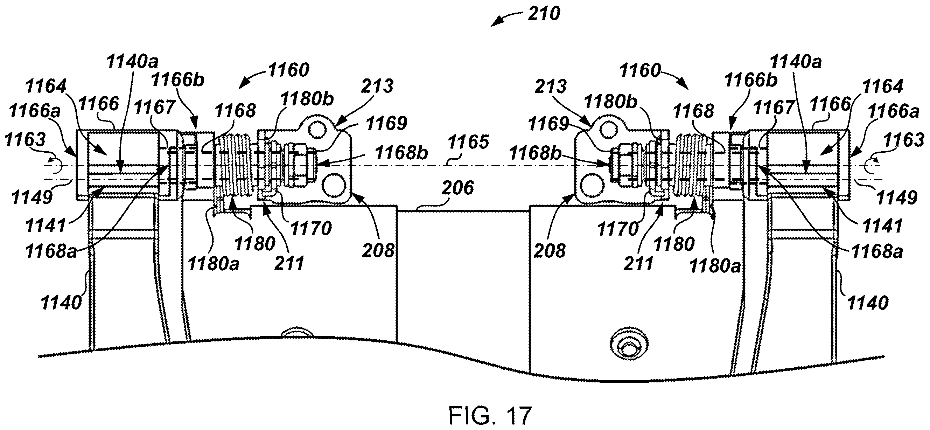

Referring now to Figs. 16-19, in some examples, hinge mechanism 210 includes an axis of rotation 1165, a pair of variable tilt assemblies 1160, the display support members 208, and a pair of torsional springs 1180. As best shown in Fig. 17, each variable tilt assembly 1160 comprises a rotating knuckle 1166, a cam 1170, a shaft 1168 extending between knuckle 1166 and cam 1170 along axis 1165 (note: shaft 1168 is shown with a hidden line in Fig. 17), and a locking nut 1169. In this example, knuckle 1166 is substantially cylindrical in shape and includes a first or outer end 1166a, a second or inner end 1166b opposite the outer end 1166a, an open bay or receptacle 1164, and an aperture 1167 (shown with a hidden line in Fig. 17) extending along axis 1165 from the inner end 1166b.

Shaft 1168 includes a first or outer end 1168a, and a second or inner end 1168b opposite the outer end 1168a. Outer end 1168a is received and secured within aperture 1167, while nut 1169 is secured to inner end 1168b such that knuckle 1166, shaft 1168, and nut 1169 each rotate together about axis 1165 during operation. In some example, nut 1169 is threadably engaged to inner end 1168b of shaft 1168; however, other methods of securing nut 1169 to shaft 1168 may be used.

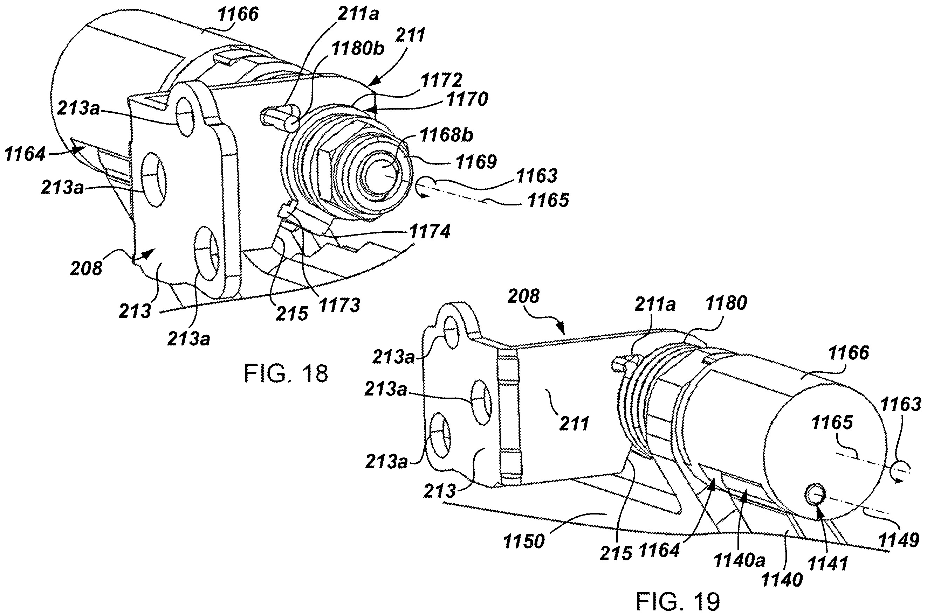

As is best shown in Fig. 18, cam 1170 includes a substantially cylindrical body 1172 and a radially extending tab 1174. Body 1172 includes a throughbore (not shown) that receives shaft 1168 during operation. In some examples, throughbore of body 1172 is keyed to the shaft 1168 such that rotations of shaft 1168 about axis 1165 are matched by rotations of cam 1170. Thus, during operation, cam 1170 rotates along with knuckle 1166, nut 1169, and shaft 1168 about the axis 1165. Tab 1174 includes an engagement surface 1173 that, as will be described in more detail below, engages the display support member 208 to limit the maximum forward tilt of display 100 (see e.g., Figure 1) during operation.

As is best shown in Figs. 17-19, each display support member 208 is also disposed about one of the shafts 1168, axially between knuckle 1166 and nut 1169. In particular, each member 208 includes coupling section 211 and a mounting section 213. Mounting section 213 includes a plurality of mounting apertures or holes 213a that are arranged to receive attachment mechanisms to secure display 100 thereto as previously described. Coupling section 211 extends from mounting section 213 and includes a throughbore (not shown), an aperture 211a, and a stop surface 215. The throughbore of the coupling section 211 rotatably receives shaft 1168 such that member 208 may rotate about axis 1165 independently of knuckle 1166, shaft 1168, and nut 1169 during operation. However, as is best shown in Fig. 18, rotation of member 208 about axis 1165 along a direction of rotation 1163 is limited by cam 1170. In particular, member 208 may only rotate about the axis 1165 in the direction 1163 until the stop surface 215 engages or abuts surface 1173 on tab 1174. In some examples, rotation of the member 208 along the direction 1163 corresponds to tilting an upper edge 100a of display 100 away from assembly 102 (i.e., toward a user or viewer) relative to the lower edge (see Figs. 11 and 12). Thus, the position of tab 1174 indicates the maximum forward tilt position of display 100 during operation.

Referring still to Figs. 17-19, each torsional spring 1180 includes a first or outer end 1180a, a second or inner end 1180b, and a body 1180c extending between the ends 1180a, 1180b and helically wound around shaft 1168. Outer end 1180a is secured to arm 106 while inner end 1180b extends through aperture 211a of coupling section 211 of coupling support member 208. Thus, as member 208 rotates about axis 1165 along the direction 1163, end 1180b rotates along the direction 1163 relative to the end 1180b causing body 1180c of spring 1180 loosen or unwind from shaft 1168 thereby resulting in spring 1180 exerting an ever increasing torque on shaft 1168 in a direction opposite the direction of rotation 1163. Thus, spring 1180 rotationally biases member 208 about shaft 1168 in a direction opposite the direction of rotation 1163.

Referring now to Figures 16, 20 and 21, as previously shown, in some examples, arm 104 comprises a central arm support member 206 which further includes a first or upper end 206a coupled to hinge mechanism 210, and a second or lower end 206b opposite the upper end 206a and coupled to hinge assembly 216. In addition, arm 104 includes a pair of bar links 1140 that extend on opposite sides of member 206 between mechanism 210 and assembly 216.

Each link 1140 includes a first or upper end 1140a, a second or lower end 1140b, and a bend 1140c disposed between the ends 1140a, 1140b along link 1140. A first section 1142 having a first central axis 1143 extends along link 1140 between upper end 1140a and bend 1140c, and a second section 1144 having a second central axis 1145 extends along link 1140 between bend 1140c and lower end 1140b. In this embodiment, axis 1143 of section 1142 is disposed at an angle θ to axis 1145 of section 1144. In some implementations, θ may range between 0 and 180°, depending on various factors such as the specific geometry of base 106 and arm 104, the size and shape of display 100, etc. Thus, in this example, each link 1140 is substantially L-shaped with section 1142 being angled or bent relative to section 1144 at the angle θ.

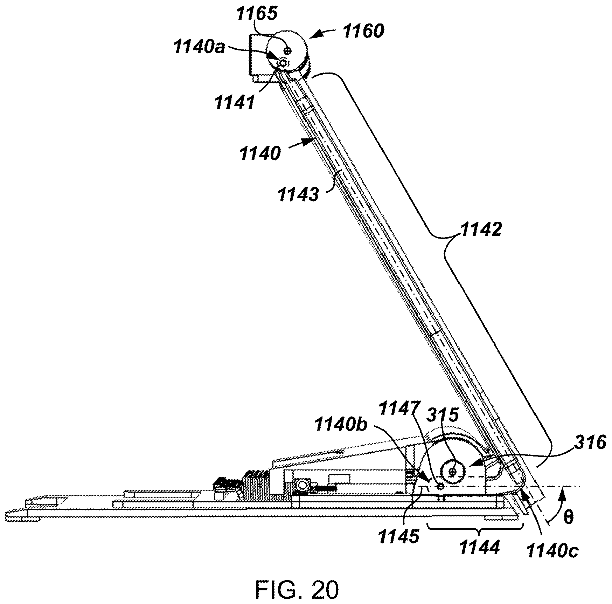

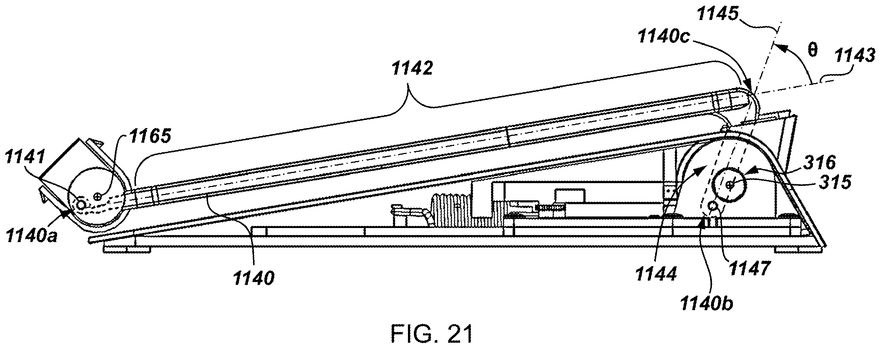

In addition, upper end 1140a of each link 1140 is pivotably coupled to one of the knuckles 1166 of mechanism 210 at a pinned connection 1141 extending through receptacle 1164 and having an axis of rotation 1149. Referring briefly again to Fig. 19, axis 1149 of connection 1141 is substantially parallel to and radially offset from the axis 1165 of mechanism 210, previously described. Referring again to Figs. 20 and 21, lower end 1140b of each link 1140 is pivotally coupled to hinge 316, previously described at a pinned connection 1147 having an axis of rotation (not specifically shown) that is parallel to and radially offset from an axis of rotation 315 of hinge 316. Thus, as is best shown in Fig. 21, as arm 104 rotates about axis 315 of hinge 316 along the direction 220 to collapse arm 104 toward base 106 (e.g., to the second position 103 shown in Fig. 12), lower end 1140b of each link 1140 also rotates about connection 1147 such that section 1144, and particularly axis 1145, moves or translates at least partially radially through axis 315 of hinge 316, and upper end 1140a rotates about axis 1149 of connection 1141. In addition, as upper end 1140a rotates about axis 1149 of connection 1141, knuckle 1166 also rotates about axis 1165 of mechanism 210 in a direction opposite the direction 1163, previously described, due to the movement of link 1140 about connections 1141 and 1147.

Referring now to Figs. 11, 12, 17, 20, and 21, during operation, as display 100 is transitioned from the first position 101 (see Fig. 11) to the second position 103 (see Fig. 12), the upper ends 1140a of each link 1140 rotate about the pinned connections 1141 further causing knuckles 1166 to rotate about the axis 1165 of mechanism 210 in the manner described above. Because the rotation of each knuckle 1166 is linked to cam 1170 through shaft 1168 as previously described, as knuckle 1166 rotates about axis 1165 in a direction opposite the direction 1163, cam 1170 and thus tab 1174 also rotates about axis 1165 in a direction that is opposite the direction 1163 (e.g., see Fig. 19). In addition, since the location of tab 1174 indicates the maximum forward tilt position of display 100, the rotation of cam 1170 opposite the direction 1163 in the manner described above works to decrease the maximum forward tilt position and thus also the maximum forward tilt angle of display 100 during operation. This decrease in the maximum forward tilt angle of display 100 further ensures that the center of gravity of assembly 102 and display 100 remains between display 100 and rear end 1106b of base 106 as display 100 is moved to the second position 103.

Referring now to Figs. 1, 2, 11, and 12, as previously described, in some examples display 100 includes a recess 108 to receive part of the arm 104 when the display device 100 rotates or collapses toward arm 104 (e.g., see Fig. 11). In addition, as is best seen in Figs. 11 and 12, mechanism 210 is coupled to display 100 through members 208 within recess 108 such that the mechanism 210 is at least partially disposed within recess 108. As a result, the axis 1165 of mechanism 210 is disposed between a front surface 105 and the rear surface 107 of display 100 such that hinge mechanism 210 may be referred to herein as "inset." Therefore, during operation, as display 100 is moved from the first position 101 to the second position 103, the inset position of mechanism 210 allows display 100 to attain a relatively lower position (i.e., when display is in the second position 103) then would otherwise be possible.

In the manner described, through use of a support assembly (e.g., assembly 102) in accordance with the principles disclosed herein, a user may transition an electronic display (e.g., display 100) from a position that is arranged for simple viewing applications (e.g., position 101) to a position that is more ergonomically arranged for touch screen applications (e.g., position 103). In addition, through use of a support assembly in accordance with the principles disclosed herein, as a user transitions the display between a viewing position (e.g., position 101) to a touch screen position (e.g., position 103), the center of gravity is maintained substantially between the display and a rear end (e.g., end 1106b) of a base (e.g., base 106) to allow the display 100 to maintain its position on a support surface (e.g., surface 15).

While examples disclosed herein have included a pair of variable tilt assemblies 1160, it should be appreciated that in other examples, more or less than two variable tilt assemblies 1160 may be included on mechanism 210 of assembly 102 while still complying with the principles disclosed herein. In addition, while examples disclosed herein have included a pair of torsional spring 1180 within assembly 210, it should be appreciated that in other examples, more or less than two torsional springs 1180 and even no torsional springs 1180 may be included while still complying with the principles disclosed herein. Further, in some examples, no locking nut 1169 is included on mechanism 210 while still complying with the principles disclosed herein. In addition, in some examples, it should be appreciated that mechanism 210 may further include other components such as, for example, assemblies and components to apply friction to resist rotation about axis 1165. For example, in some implementations, Belleville washers are disposed about shaft 1168 to provide axial compression between the other components disposed thereon (e.g., cam 1170, member 208, etc.). Further, while embodiments disclosed herein have included substantially L shaped bar links 1140, it should be appreciated that in other examples, other shapes for bar links 1140 may be used while still complying with the principles disclosed herein. For example, in some implementations, links 1140 may be substantially straight such that the angle θ is substantially equal to 0 or 180° and the axes 1143, 1145 of sections 1142, 1144, respectively, are substantially aligned within one another. Still further, while embodiments disclosed herein have included features to maintain the center of gravity between the display 100 and the rear end 1106b of base 106, it should be appreciated that in other embodiments, the center of gravity is maintained only substantially behind the display 100 and thus may in fact also be behind the rear end 1106b of base 106 while still complying with the principles disclosed herein.

## Claims

1. A support stand for a display (102), comprising:
a wedge shaped base (106) having a front end (1106a), a rear end (1106b), a top surface (1108), a bottom surface (1110), and a height measured between the top surface and the bottom surface, wherein the height proximate the front end is smaller than the height proximate the rear end;
an arm (104) including a first end, a second end opposite the first end, wherein the first end is coupled to a display support member (208) at a first hinge (210) and the second end is coupled to the base at a second hinge (216);
a variable tilt assembly (1160) to adjust a maximum forward tilt angle of the display support member (208) as the arm is rotated about the second hinge (216);
wherein the second hinge (216) also includes:
a rotatable first cam (402) having a non-circular profile;
a cable (314) attached to the rotatable cam (402), wherein a portion of the cable (314) is windable about the non-circular profile of the first cam (402) as the first cam (402) rotates; and
a biasing assembly (304) attached to the cable (314) to apply a biasing force on the cable (314) and
**characterized in that** the variable tilt assembly (1160) further comprises:
a second cam (1170) coupled to the first hinge (210), the second cam (1170) having an engagement surface (1173) to engage the support member (208) when a display attachment device (100) is tilted to the maximum forward tilt angle; and
a bar link (1140) coupled to the both the first hinge (210) and the base (106) to rotate the second cam (1170) about the first hinge (210) as the arm (104) is rotated about the second hinge (216).

2. The support stand of claim 1, wherein the bar link is substantially L shaped and includes a first section and a second section, wherein the first section is angled relative to the first section at a non-zero angle.

3. The support stand of claim 2, wherein the first hinge has a first axis of rotation; wherein the second hinge has a second axis of rotation that is parallel to and radially offset from the first axis of rotation; and wherein the second section of the bar link translates radially through the second axis of rotation when the arm is rotated about the second hinge toward the base.

4. The support stand of claim 1, further comprising a weighted mass disposed within the base proximate the rear end.

5. The support stand of claim 1, wherein the variable tilt assembly is to decrease the maximum forward tilt angle as the arm rotates about the second hinge toward the base.

6. The support stand of claim 1, wherein the height of the base increases linearly from the front end to a point that is proximate the rear end.

7. A computer system, comprising:
a display device (100) including a front side, a back side, a top edge, and a bottom edge;
a support member coupling the display device (100) to a first hinge; and
a support stand (102) according to claim 1 to support the display device on a support surface, the support stand comprising:
a wedge shaped base (106) having a front end (1106a), a rear end (1160b), a top surface (1108), a bottom surface (1110), and a height measured between the top surface and the bottom surface, wherein the height proximate the front end is smaller than the height proximate the rear end;
an arm (104) including a first end, a second end opposite the first end, wherein the first end is coupled to the display device (100), by a support member (208), at the first hinge (210) and the second end is coupled to the base (106) at a second hinge (216);
a variable tilt assembly (1160) to adjust a maximum forward tilt angle of the display (100) as the arm is rotated about the second hinge (216);
wherein the second hinge (216) comprises:
a rotatable first cam (402) having a non-circular profile;
a cable (314) attached to the rotatable cam (402), wherein a portion of the cable (314) is windable about the non-circular profile of the first cam (402) as the first cam (402) rotates; and
a biasing assembly (304) attached to the cable (314) to apply a biasing force on the cable (314) and
wherein the variable tilt assembly (1160) comprises:
a second cam (1170) coupled to the first hinge (210), the second cam (1170) having an engagement surface (1173) to engage the support member (208) when the display device (100) is tilted to the maximum forward tilt angle; and
a bar link (1140) coupled to the both the first hinge (210) and the base (106) to rotate the second cam (1170) about the first hinge (210) as the arm (104) is rotated about the second hinge (216).

8. The computer system of claim 7, wherein the display device has a first position where the arm is rotated about the second hinge away from the base such that a bottom edge of the display device is disposed at or above the support surface.

9. The computer system of claim 7 or 8, wherein the display device has a second position where the arm is rotated about the second hinge toward the base such that the bottom edge of the display device is disposed below the support surface.

10. The computer system of any one of claims 7 to 9, wherein the bar link is substantially L shaped and includes a first section and a second section, wherein the first section is angled relative to the first section at a non-zero angle.

11. The computer system of claim 10, wherein the first hinge has a first axis of rotation; wherein the second hinge has a second axis of rotation that is parallel to and radially offset from the first axis of rotation; and wherein the second section of the bar link translates radially through the second axis of rotation when the arm is rotated about the second hinge toward the base.

12. The computer system of any one of claim 7-9, wherein the variable tilt assembly is to decrease the maximum forward tilt angle as the arm rotates about the second hinge toward the base.

13. The computer system of any one of claim 7-9, wherein a center of gravity of the computer system is disposed between the back side of the display device and a rear end of the base when the display device is in the first position and when the display device is in the second position.

## Patentansprüche

1. Stützfuß für eine Anzeige (102), Folgendes umfassend:
eine keilförmige Basis (106) mit einem vorderen Ende (1106a), einem hinteren Ende (1106b), einer oberen Oberfläche (1108), einer unteren Oberfläche (1110) und einer Höhe, gemessen zwischen der oberen Oberfläche und der unteren Oberfläche, wobei die Höhe in der Nähe des vorderen Endes geringer ist als die Höhe in der Nähe des hinteren Endes;
einen Arm (104), einschließlich eines ersten Endes, eines zweiten, dem ersten gegenüberliegenden, Endes, wobei das erste Ende an einem ersten Scharnier (210) an ein Anzeigestützelement (208) gekoppelt ist und wobei das zweite Ende an einem zweiten Scharnier (216) an die Basis gekoppelt ist;
eine variable Kippanordnung (1160), um einen maximalen Kippwinkel nach vorn des Anzeigestützelements (208) einzustellen, während der Arm um das zweite Scharnier (216) gedreht wird; wobei das zweite Scharnier (216) ferner Folgendes enthält:
einen drehbaren ersten Exzenter (402) mit einem nicht runden Profil;
ein Kabel (314), befestigt an dem drehbaren Exzenter (402), wobei ein Abschnitt des Kabels (314) um das nicht runde Profil des ersten Exzenters (402) wickelbar ist, während der erste Exzenter (402) sich dreht; und
eine Vorspannungsanordnung (304), befestigt an dem Kabel (314), um eine Vorspannkraft auf das Kabel (314) aufzubringen und
**dadurch gekennzeichnet, dass** die variable Kippanordnung (1160) ferner Folgendes umfasst:
einen zweiten Exzenter (1170), gekoppelt an das erste Scharnier (210), wobei der zweite Exzenter (1170) eine Eingriffsoberfläche (1173) aufweist, um das Stützelement (208) in Eingriff zu nehmen, wenn eine Anzeigebefestigungsvorrichtung (100) um den maximalen Kippwinkel nach vorn geneigt ist; und
eine Gestängeverbindung (1140), gekoppelt mit dem ersten Scharnier (210) und der Basis (106), um den zweiten Exzenter (1170) um das erste Scharnier (210) zu drehen, während der Arm (104) um das zweite Scharnier (216) gedreht wird.

2. Stützfuß nach Anspruch 1, wobei die Gestängeverbindung im Wesentlichen L-förmig ist und einen ersten Abschnitt und einen zweiten Abschnitt enthält, wobei der erste Abschnitt in Bezug auf den ersten Abschnitt in einem Winkel ungleich null angewinkelt ist.

3. Stützfuß nach Anspruch 2, wobei das erste Scharnier eine erste Drehachse hat; wobei das zweite Scharnier eine zweite Drehachse hat, die parallel zu der ersten Drehachse und von dieser radial versetzt ist; und wobei der zweite Abschnitt der Gestängeverbindung sich radial durch die zweite Drehachse verlagert, wenn der Arm um das zweite Scharnier zu der Basis hin gedreht wird.

4. Stützfuß nach Anspruch 1, ferner umfassend eine beschwerte Masse, angeordnet in der Basis in der Nähe des hinteren Endes.

5. Stützfuß nach Anspruch 1, wobei die variable Kippanordnung vorgesehen ist, den maximalen Kippwinkel nach vorn zu verringern, während der Arm sich um das zweite Scharnier zu der Basis hin dreht.

6. Stützfuß nach Anspruch 1, wobei die Höhe der Basis linear vom vorderen Ende zu einem Punkt hin ansteigt, der in der Nähe des hinteren Endes liegt.

7. Computersystem, Folgendes umfassend:
eine Anzeigevorrichtung (100) mit einer vorderen Seite, einer hinteren Seite, einer Oberkante und einer Unterkante;
ein Stützelement, das die Anzeigevorrichtung (100) an ein erstes Scharnier koppelt; und
einen Stützfuß (102) nach Anspruch 1, um die Anzeigevorrichtung auf einer Stützoberfläche abzustützen, wobei der Stützfuß Folgendes umfasst:
eine keilförmige Basis (106) mit einem vorderen Ende (1106a), einem hinteren Ende (1160b), einer oberen Oberfläche (1108), einer unteren Oberfläche (1110) und einer Höhe, gemessen zwischen der oberen Oberfläche und der unteren Oberfläche, wobei die Höhe in der Nähe des vorderen Endes geringer ist als die Höhe in der Nähe des hinteren Endes;
einen Arm (104), einschließlich eines ersten Endes, eines zweiten, dem ersten gegenüberliegenden, Endes, wobei das erste Ende an dem ersten Scharnier (210) durch ein Stützelement (208) an die Anzeigevorrichtung (100) gekoppelt ist und wobei das zweite Ende an einem zweiten Scharnier (216) an die Basis (106) gekoppelt ist;
eine variable Kippanordnung (1160), um einen maximalen Kippwinkel nach vorn der Anzeige (100) einzustellen, während der Arm um das zweite Scharnier (216) gedreht wird; wobei das zweite Scharnier (216) Folgendes umfasst:
einen drehbaren ersten Exzenter (402) mit einem nicht runden Profil;
ein Kabel (314), befestigt an dem drehbaren Exzenter (402), wobei ein Abschnitt des Kabels (314) um das nicht runde Profil des ersten Exzenters (402) wickelbar ist, während der erste Exzenter (402) sich dreht; und
eine Vorspannungsanordnung (304), befestigt an dem Kabel (314), um eine Vorspannkraft auf das Kabel (314) aufzubringen, und
wobei die variable Kippanordnung (1160) Folgendes umfasst:
einen zweiten Exzenter (1170), gekoppelt an das erste Scharnier (210), wobei der zweite Exzenter (1170) eine Eingriffsoberfläche (1173) aufweist, um das Stützelement (208) in Eingriff zu nehmen, wenn die Anzeigevorrichtung (100) um den maximalen Kippwinkel nach vorn geneigt ist; und
eine Gestängeverbindung (1140), gekoppelt mit dem ersten Scharnier (210) und der Basis (106), um den zweiten Exzenter (1170) um das erste Scharnier (210) zu drehen, während der Arm (104) um das zweite Scharnier (216) gedreht wird.

8. Computersystem nach Anspruch 7, wobei die Anzeigevorrichtung eine erste Position aufweist, in der der Arm um das zweite Scharnier von der Basis weg gedreht wird, sodass eine Unterkante der Anzeigevorrichtung an oder über der Stützoberfläche angeordnet ist.

9. Computersystem nach Anspruch 7 oder 8, wobei die Anzeigevorrichtung eine zweite Position aufweist, in der der Arm um das zweite Scharnier zu der Basis hin gedreht wird, sodass die Unterkante der Anzeigevorrichtung unterhalb der Stützoberfläche angeordnet ist.

10. Computersystem nach einem der Ansprüche 7 bis 9, wobei die Gestängeverbindung im Wesentlichen L-förmig ist und einen ersten Abschnitt und einen zweiten Abschnitt enthält, wobei der erste Abschnitt in Bezug auf den ersten Abschnitt in einem Winkel ungleich null angewinkelt ist.

11. Computersystem nach Anspruch 10, wobei das erste Scharnier eine erste Drehachse hat; wobei das zweite Scharnier eine zweite Drehachse hat, die parallel zu der ersten Drehachse und von dieser radial versetzt ist; und wobei der zweite Abschnitt der Gestängeverbindung sich radial durch die zweite Drehachse verlagert, wenn der Arm um das zweite Scharnier zu der Basis hin gedreht wird.

12. Computersystem nach einem der Ansprüche 7-9, wobei die variable Kippanordnung vorgesehen ist, den maximalen Kippwinkel nach vorn zu verringern, während der Arm sich um das zweite Scharnier zu der Basis hin dreht.

13. Computersystem nach einem der Ansprüche 7-9, wobei ein Schwerpunkt des Computersystems zwischen der Rückseite der Anzeigevorrichtung und einem hinteren Ende der Basis angeordnet ist, wenn die Anzeigevorrichtung in der ersten Position ist und wenn die Anzeigevorrichtung in der zweiten Position ist.

## Revendications

1. Support à montant pour un écran (102) comprenant :
une base en forme de coin (106) ayant une extrémité avant (1106a), une extrémité arrière (1106b), une surface supérieure (1108), une surface inférieure (1110) et une hauteur mesurée entre la surface supérieure et la surface inférieure, la hauteur à proximité de l'extrémité avant étant inférieure à la hauteur à proximité de l'extrémité arrière ;
un bras (104) comprenant une première extrémité, une seconde extrémité opposée à la première extrémité, la première extrémité étant couplée à un élément de support d'écran (208) au niveau d'une première charnière (210) et la seconde extrémité étant couplée à la base au niveau d'une seconde charnière (216) ;
un ensemble d'inclinaison variable (1160) pour ajuster un angle d'inclinaison avant maximal de l'élément de support d'écran (208) lorsque le bras tourne autour de la seconde charnière (216) ;
dans lequel la seconde charnière (216) comprend également :
une première came rotative (402) ayant un profil non circulaire ;
un câble (314) fixé à la came rotative (402), dans lequel une partie du câble (314) peut être enroulée autour du profil non circulaire de la première came (402) lorsque la première came (402) tourne ; et
un ensemble de sollicitation (304) fixé au câble (314) pour appliquer une force de sollicitation sur le câble (314) et
**caractérisé en ce que** l'ensemble à inclinaison variable (1160) comprend en outre :
une seconde came (1170) couplée à la première charnière (210), la seconde came (1170) ayant une surface d'engagement (1173) pour engager l'élément de support (208) lorsqu'un dispositif de fixation d'affichage (100) est incliné au maximum de l'angle d'inclinaison avant ; et
une barre de liaison (1140) couplée à la fois à la première charnière (210) et à la base (106) pour faire tourner la seconde came (1170) autour de la première charnière (210) lorsque le bras (104) tourne autour de la seconde charnière (216).

2. Support à montant selon la revendication 1, dans lequel la barre de liaison est sensiblement en forme de L et comprend une première section et une seconde section, la première section étant inclinée par rapport à la première section selon un angle non nul.

3. Support à montant selon la revendication 2, dans lequel la première charnière possède un premier axe de rotation ; dans lequel la seconde charnière possède un second axe de rotation qui est parallèle au premier axe de rotation et décalé radialement par rapport à celui-ci ; et dans lequel la seconde section de la barre de liaison se translate radialement par le second axe de rotation lorsque le bras est tourné autour de la deuxième charnière vers la base.

4. Support à montant selon la revendication 1, comprenant en outre une masse pondérée disposée dans la base à proximité de l'extrémité arrière.

5. Support à montant selon la revendication 1, dans lequel l'ensemble à inclinaison variable est destiné à diminuer l'angle d'inclinaison avant maximal lorsque le bras tourne autour de la seconde charnière vers la base.

6. Support à montant selon la revendication 1, dans lequel la hauteur de la base augmente linéairement depuis l'extrémité avant jusqu'à un point proche de l'extrémité arrière.

7. Système informatique comprenant :
un dispositif d'affichage (100) comprenant un côté avant, un côté arrière, un bord supérieur et un bord inférieur ;
un élément de support couplant le dispositif d'affichage (100) à une première charnière ; et
un support à montant (102) selon la revendication 1 pour supporter le dispositif d'affichage sur une surface de support, le support à montant comprenant :
une base en forme de coin (106) ayant une extrémité avant (1106a), une extrémité arrière (1160b), une surface supérieure (1108), une surface inférieure (1110) et une hauteur mesurée entre la surface supérieure et la surface inférieure, la hauteur à proximité de l'extrémité avant étant inférieure à la hauteur à proximité de l'extrémité arrière ;
un bras (104) comprenant une première extrémité, une seconde extrémité opposée à la première extrémité, la première extrémité étant couplée au dispositif d'affichage (100) par un élément de support (208) au niveau de la première charnière (210) et la seconde extrémité étant couplée à la base (106) au niveau d'une seconde charnière (216) ;
un ensemble d'inclinaison variable (1160) pour ajuster un angle d'inclinaison avant maximum de l'écran (100) lorsque le bras est tourné autour de la seconde charnière (216) ;
dans lequel la seconde charnière (216) comprend :
une première came rotative (402) ayant un profil non circulaire ;
un câble (314) fixé à la came rotative (402), dans lequel une partie du câble (314) peut être enroulée autour du profil non circulaire de la première came (402) lorsque la première came (402) tourne ; et
un ensemble de sollicitation (304) fixé au câble (314) pour appliquer une force de sollicitation sur le câble (314) et
dans lequel l'ensemble d'inclinaison variable (1160) comprend :
une seconde came (1170) couplée à la première charnière (210), la seconde came (1170) ayant une surface d'engagement (1173) pour venir en prise avec l'élément de support (208) lorsque le dispositif d'affichage (100) est incliné jusqu'à l'angle d'inclinaison avant maximum ; et
une barre de liaison (1140) couplée à la fois à la première charnière (210) et à la base (106) pour faire tourner la seconde came (1170) autour de la première charnière (210) lorsque le bras (104) tourne autour de la seconde charnière (216).

8. Système informatique selon la revendication 7, dans lequel le dispositif d'affichage possède une première position dans laquelle le bras est tourné autour de la seconde charnière en l'éloignant de la base de sorte qu'un bord inférieur du dispositif d'affichage est disposé sur ou au-dessus de la surface de support.

9. Système informatique selon la revendication 7 ou 8, dans lequel le dispositif d'affichage possède une seconde position dans laquelle le bras tourne autour de la seconde charnière vers la base de sorte que le bord inférieur du dispositif d'affichage est disposé au-dessous de la surface de support.

10. Système informatique selon l'une quelconque des revendications 7 à 9, dans lequel la barre de liaison est sensiblement en forme de L et comprend une première section et une seconde section, la première section étant inclinée par rapport à la première section selon un angle non nul.

11. Système informatique selon la revendication 10, dans lequel la première charnière possède un premier axe de rotation ; dans lequel la seconde charnière possède un second axe de rotation qui est parallèle au premier axe de rotation et décalé radialement par rapport à celui-ci ; et dans lequel la seconde section de la barre de liaison se translate radialement par le second axe de rotation lorsque le bras est tourné autour de la seconde charnière vers la base.

12. Système informatique selon l'une quelconque des revendications 7 à 9, dans lequel l'ensemble à inclinaison variable est destiné à diminuer l'angle d'inclinaison avant maximal lorsque le bras tourne autour de la seconde charnière vers la base.

13. Système informatique selon l'une quelconque des revendications 7 à 9, dans lequel un centre de gravité du système informatique est disposé entre le côté arrière du dispositif d'affichage et une extrémité arrière de la base lorsque le dispositif d'affichage est dans la première position et lorsque le dispositif d'affichage est dans la seconde position.
